# EUROPEAN PATENT SPECIFICATION

(11) **EP 2 783 221 B1**
(45) Date of publication and mention of the grant of the patent: **14.09.2016**
(21) Application number: 12795598.7
(22) Date of filing: 21.11.2012
(51) Int. Cl.: G01P 15/06, B29C 70/08

(54) **COMPOSITE MATERIAL COMPONENT**
VERBUNDWERKSTOFFKOMPONENTE
COMPOSANT DE MATÉRIAU COMPOSITE

(30) Priority: 23.11.2011 GB 201120227
(43) Date of publication of application: 01.10.2014
(73) Proprietor: Crompton Technology Group Ltd., Banbury, Oxfordshire OX16 4SU (GB)
(72) Inventor: CHASE, Ian Thomas, Salisbury Wiltshire SP5 2AN (GB); LEWIS, Paul Anthony, Warwick Warwickshire CV34 4JT (GB)
(74) Representative: Leckey, David Herbert
(86) International application number: PCT/GB2012/052884
(87) International publication number: WO 2013/076486

(56) References cited:
- WO-A1-2005/045389
- CN-U- 2 115 860

## Description

This invention relates to a composite material component, and in particular to a component of enhanced ability to withstand impacts without reducing the ability thereof to function normally, and in which the magnitude of impacts experienced by the component can be assessed.

The use of composite materials in the manufacture of a number of components, for example for use in aerospace and automotive applications, is becoming increasingly common. The use of such composite materials is advantageous in that significant weight savings can be achieved without reducing the strength of the component. By way of example, EP2116356 describes the use of fibre reinforced composite materials in the supporting struts for a deck of an aircraft fuselage.

Composite materials can be vulnerable to impact damage, resulting in the formation of cracks, fibre failures within parts of the component, or delamination thereof. Such damage can significantly impair the performance of the component, and so it is important for composite material components to be inspected for such damage. However, as the nature of the damage can be very difficult to evaluate simply by visual inspection, it is often necessary for the components to be inspected to be removed and then assessed using non-destructive, for example ultra-sound or X-ray based, inspection techniques involving significant cost and complexity. Clearly, the need to remove the components and conduct such inspection techniques to determine whether or not the components are suitable for continued use is inconvenient.

Impact damage may also occur prior to installation and use of a component. For example, damage could occur during storage or transportation thereof. Inspection of components prior to installation may also be necessary. Clearly, whilst such inspection will not require an initial step of removal of the component prior to inspection, the relatively complex inspection processes used adds additional complexity to the manufacturing and installation process and so is undesirable.

Rather than use inspection techniques of the type outlined hereinbefore, another technique that is known is to incorporate micro-capsules containing a dye in or on the component. In the event that the component is damaged, one or more of the micro-capsules will burst, providing a visible indication that an impact has taken place. Whilst indicating that the component has been involved in an impact, this technique does not provide an accurate indication of the magnitude of the impact and so provides little assistance in determining whether or not the component is still suitable for use. Also, no additional protection against impact damage is provided. It is also noted that a composite component can be made more impact resistant by increasing the size and/or weight thereof or by incorporating a protective shroud in its operating location. However, these features add considerably to the cost and weight of the component or assembly.

US2006/0234007 describes a technique whereby damage to the edge of a layered fibre reinforced material can be guarded against and any such damage can be detected. The technique simply involves securing a shield to the relevant part of the material to guard against damage, and providing the shield with an impact indicating paint or the like to indicate when an impact has been experienced. US4917938 discloses another impact indication technique in which a filamentary material layer is provided forming a thin outer layer of the material which delaminates and discolours in the event of an impact thereto. It is an object of the invention to provide a component of enhanced ability to withstand impacts and wherein the magnitude of impacts experienced thereby can be assessed.

A machine cover constructed from a fibre reinforced plastic is disclosed in CN 2115860A, which discloses the features of the preamble of claim 1.

According to the present invention there is provided a composite material component comprising a core impregnated by and embedded within a matrix material to define a main portion and a radially outwardly extending bead encircling the main portion, the bead being separated from the main portion by a reduced thickness neck, wherein the neck is structurally weaker than the bead.

In use, in the event that the component is impacted, and the impact is experienced by the bead, the bead will provide protection for the main portion against damage, and any resulting damage to the component will be located, primarily, in the neck region as this is weaker than the bead. The damage to the neck will take the form of cracks or crazing of the matrix material and so will be apparent upon visual inspection. The lengths of the cracks or crazed parts of the neck will provide an indication of the magnitude of the impact, and the position of the cracks or crazed parts will provide an

indication of the location and orientation of the impact, and so allow an assessment to be made of whether the component is in a condition suitable for continued use. As the impact was borne by the bead and the damage sustained to the neck, it will be appreciated that damage to the main portion of the component is minimised. The bead will remain in position after the impact, and so will continue to provide protection to the main portion of the component.

The component is conveniently of generally planar form, or includes a part of generally planar form defining at least part of the main portion, the bead and the neck. For example, the component may be in the form of a disc. Alternatively, it may comprise a generally tubular component with the bead being defined by a radially outwardly flared flange thereof, or be of another form incorporating a generally planar, radially outwardly extending flange forming part of the main portion, the bead and the neck.

The core conveniently comprises one or more layers of a woven fibrous material. For example, it could be of carbon fibre, aramid fibre or glass fibre form.

The bead is conveniently provided with generally circumferentially extending reinforcing hoops. The hoops may be of fibrous form. For example, one or more tows of reinforcing fibres may be stitched to the part of the core forming the bead, prior to impregnation, to define one or more annular loops of reinforcement. It will be appreciated that the provision of such reinforcement assists in ensuring that the bead is stronger, and so better able to withstand impacts, than the neck.

One form of component to which the invention may be applied is a torque disc. However, it will be appreciated that the invention is not restricted in this regard and may be applied to a range of other components.

The invention will further be described, by way of example, with reference to the accompanying drawings, in which:
Figure 1 is a diagrammatic perspective view of a composite material component according to an embodiment of the invention; and
Figure 2 is a sectional view, to an enlarged scale, of part of the component of Figure 1.

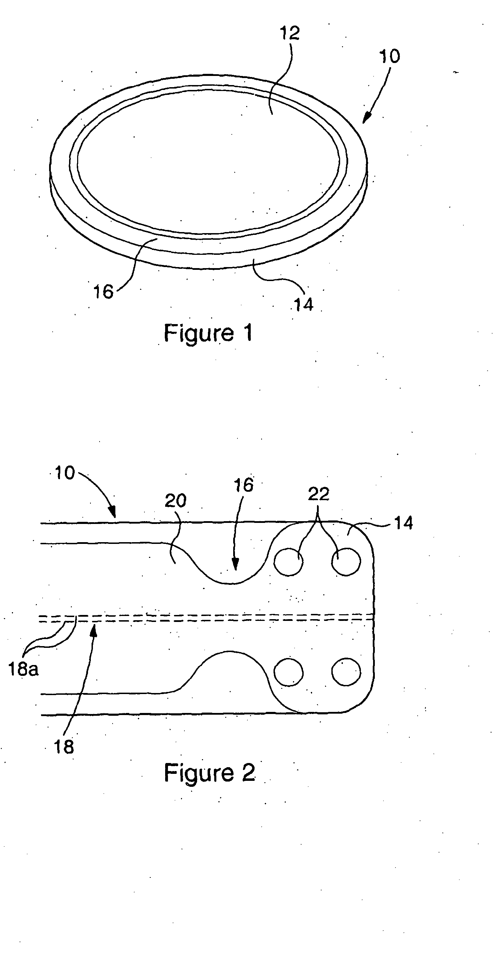

The component 10 illustrated in Figure 1 is of generally planar, disc-like form, comprising a central, main portion 12 encircled by an annular bead 14. The bead 14 is separated from the main portion 12, but connected thereto, by a neck 16 of reduced thickness which is structurally weaker than the bead 14.

By way of example, the component 10 could take the form of a torque disc for transmitting torque between a pair of generally coaxially arranged rotating shafts or other components, the main portion 12 being formed with fixings or fixing points to allow the securing of the main portion 12 to the respective shafts. Alternatively, the component 10 could take the form of a tube or shaft. In such an arrangement, a central part of the main portion 12 may be shaped to form such a tube or shaft, with the radially outer part of the main portion 12, neck 16 and bead 14 taking substantially the form illustrated.

The precise use of the component 10 is not of relevance to the invention and so will not be described in further detail, save to note that the invention may be applied to a very wide range of components suitable for use in a number of different applications.

The component 10 is of composite form, comprising (in this embodiment) a generally planar central core 18 made up of one or more layers 18a of a woven fibrous material such as a carbon fibre, glass fibre or aramid fibre weave. The central core 18 is impregnated by and embedded within a resin matrix material 20, moulded to take the desired generally planar shape to allow the main portion 12 to perform its intended function, and also to result in the formation of the bead 14 and neck 16 radially outward of and coplanar with the main portion 12. The manufacturing process used to form the component 10 is a conventional composite material manufacturing process, with the exception that it involves the formation of the component with the bead 16 and neck 14.

As shown in Figure 2, the part of the component 10 defining the bead 14 incorporates one or more, in this case four, reinforcing hoops 22. The reinforcing hoops 22 are formed by stitching or otherwise securing a suitable reinforcing material to the core 18 prior to impregnation. By way of example, one or more tows of a carbon fibre or other fibrous reinforcing material may be stitched to the core 18. Conveniently, rather than stitch the tows directly to a woven material, the tows are stitched to a non-woven veil layer (not shown) forming part of the core 18, extending adjacent the woven fibrous material layer(s) 18a thereof.

In use, if the component 10 is subject to an impact, the impact being experienced by the bead 16, the bead 16 will prevent contact with the main portion 12 and so minimise the risk of damage thereto. If the magnitude of the impact is greater than a predetermined level, then the impact will cause the neck 16 to crack or become crazed, providing a visible indication that a large impact has been experienced. It will be appreciated that the neck is the part of the component 10 which will be subject to most damage and this is intentionally designed to be the part of the component 10 of weakest form, the bead 16 incorporating the reinforcing hoops 22 and so being of good strength. As is clear from Figure 2, the bead 16 is conveniently of greater thickness than the main portion 12, thus providing impact protection from a number of different directions.

By studying the lengths of any cracks or crazing within the neck 16, an indication of the size of the impact, and direction from which the impact was sustained can be determined.

By appropriate design of the component 10, for example by appropriate selection of the thickness and other parameters thereof, the size of impact that can be withstood without visible damage to the neck 16 can be tuned to the function and strength characteristics of the main portion 12 so that only impacts of a magnitude large enough to result in the need for the component 10 to be taken out of service result in visible damage to the neck 16.

As the core 18 extends continuously through both the main portion 12 and the bead 16, it will be appreciated that in the event of a large impact sufficient to cause the formation of cracks within the neck 16, the bead 14 will still be securely retained in position. It will continue to provide impact protection to the main portion 12. Furthermore, damage to other components as a result of parts of the component breaking loose and interfering therewith is reduced or avoided.

It will be appreciated that the invention provides a simple and convenient technique for providing impact protection for a composite material component, and for ascertaining by visual inspection whether the component has been exposed to a large magnitude impact. Furthermore, components incorporating such protection and inspection capabilities can be manufactured in a relatively low cost manner.

Whilst the description hereinbefore is primarily of one embodiment of the invention described with reference to the accompanying drawings, it will be appreciated that a number of modifications and alterations may be made thereto without departing from the scope of the invention.

## Claims

1. A composite material component (10) comprising a core (18) impregnated by and embedded within a matrix material (20) to define a main portion (12) and a radially outwardly extending bead (14) encircling the main portion (12), the bead (14) being separated from the main portion (12) by a reduced thickness neck (16), **characterized in that** the neck (16) is structurally weaker than the bead (14).

2. A component according to Claim 1 , wherein the component (10) is of generally planar form.

3. A component according to Claim 1, wherein the component (10) includes a part of generally planar form defining at least part of the main portion (12), the bead (14) and the neck (16).

4. A component according to any of the preceding claims, wherein the core (18) comprises one or more layers (18a) of a woven fibrous material.

5. A component according to Claim 4, wherein the core (18) is of woven carbon fibre, aramid fibre or glass fibre form.

6. A component according to any of the preceding claims, wherein the bead (14) is provided with at least one generally circumferentially extending reinforcing hoop (22).

7. A component according to Claim 6, wherein the hoop (22) is of fibrous form.

8. A component according to Claim 7, wherein the hoop (22) comprises one or more tows of reinforcing fibres stitched to the part of the core (18) forming the bead (14), prior to impregnation, to define one or more annular loops of reinforcement.

9. A torque disc comprising a component as claimed in any of the preceding claims, wherein the main portion thereof is formed with fixings or fixing points.

## Patentansprüche

1. Verbundstoffkomponente (10), die einen Kern (18), der durch ein Matrixmaterial (20) imprägniert wird und in dieses eingebettet ist, um einen Hauptabschnitt (12) zu definieren, und einen sich radial nach außen erstreckenden Wulst (14) umfasst, der den Hauptabschnitt (12) umgibt, wobei der Wulst (14) von dem Hauptabschnitt (12) durch einen Hals (16) reduzierter Dicke getrennt ist, **dadurch gekennzeichnet, dass** der Hals (16) strukturell schwächer als der Wulst (14) ist.

2. Komponente nach Anspruch 1, wobei die Komponente (10) eine im Allgemeinen ebenflächige Form aufweist.

3. Komponente nach Anspruch 1, wobei die Komponente (10) einen Teil mit einer im Allgemeinen ebenflächigen Form beinhaltet, der wenigstens einen Teil des Hauptabschnitts (12), des Wulstes (14) und des Halses (16) definiert.

4. Komponente nach einem der vorhergehenden Ansprüche, wobei der Kern (18) eine oder mehrere Lagen (18a) eines gewebten Fasermaterials umfasst.

5. Komponente nach Anspruch 4, wobei der Kern (18) eine gewebte Kohlefaser/, Aramid-Faser/ oder Glasfaserform aufweist.

6. Komponente nach einem der vorhergehenden Ansprüche, wobei der Wulst (14) mit mindestens einem sich im Allgemeinen in Umfangsrichtung erstreckenden Verstärkungsring (22) versehen ist.

7. Komponente nach Anspruch 6, wobei der Ring (22) eine Faserform aufweist.

8. Komponente nach Anspruch 7, wobei der Ring (22) vor der Imprägnierung einen oder mehrere Stränge aus Verstärkungsfasern umfasst, der bzw. die mit dem Teil des Kerns (18) vernäht ist bzw. sind, der den Wulst (14) bildet, um eine oder mehrere ringförmige Verstärkungsschlaufen zu definieren.

9. Drehmomentscheibe, die eine Komponente nach einem der vorhergehenden Ansprüche umfasst, wobei der Hauptabschnitt davon mit Befestigungen oder Befestigungspunkten gebildet ist.

## Revendications

1. Composant de matériau composite (10) comprenant un noyau (18) imprégné par et intégré à un matériau de matrice (20) pour définir une partie principale (12) et une bille (14) se prolongeant radialement vers l'extérieur encerclant la partie principale (12), la bille (14) étant séparée de la partie principale (12) par un col (16) d'une épaisseur réduite, **caractérisé en ce que** le col (16) est structurellement plus faible que la bille (14).

2. Composant selon la revendication 1, dans lequel le composant (10) a une forme généralement plane.

3. Composant selon la revendication 1, dans lequel le composant (10) comprend une partie d'une forme généralement plane définissant au moins une partie de la partie principale (12), de la bille (14) et du col (16).

4. Composant selon l'une quelconque des revendications précédentes, dans lequel le noyau (18) comprend une ou plusieurs couches (18a) de matériau fibreux tissé.

5. Composant selon la revendication 4, dans lequel le noyau (18) est en forme de fibre de carbone, de fibre d'aramide et de fibre de verre tissée.

6. Composant selon l'une quelconque des revendications précédentes, dans lequel la bille (14) est munie d'au moins un arceau (22) de renforcement se prolongeant généralement circonférentiellement.

7. Composant selon la revendication 6, dans lequel l'arceau (22) est de forme fibreuse.

8. Composant selon la revendication 7, dans lequel l'arceau (22) comprend une ou plusieurs rangées de fibre de renforcement cousu à la partie du noyau (18) formant la bille (14), avant l'imprégnation, afin de définir un ou plusieurs cerceaux de renforcement annulaires.

9. Disque de couple comprenant un composant tel que revendiqué dans l'une quelconque des revendications précédentes, dans lequel la partie principale de celui-ci est formée de fixations ou de points de fixation.
